(19) Europäisches Patentamt
European Patent Office
Office européen des brevets

(11) EP 3 448 893 B1

(12) **FASCICULE DE BREVET EUROPEEN**

(45) Date de publication et mention de la délivrance du brevet:
**22.05.2024 Bulletin 2024/21**

(21) Numéro de dépôt: **17794395.8**

(22) Date de dépôt: **26.10.2017**

(51) Classification Internationale des Brevets (IPC):
***C08F 4/34*** *(2006.01)* ***C08F 18/24*** *(2006.01)*
***G02B 1/04*** *(2006.01)*

(52) Classification Coopérative des Brevets (CPC):
(C-Sets disponibles)
**C08F 4/34; C08F 18/24** (Cont.)

(86) Numéro de dépôt international:
**PCT/FR2017/052957**

(87) Numéro de publication internationale:
**WO 2018/078291 (03.05.2018 Gazette 2018/18)**

(54) **COMPOSITION À BASE DE MONOMÈRES ALLYLIQUES ET DE PEROXYDE(S) POUR LA FABRICATION DE VERRES ORGANIQUES**

ZUSAMMENSETZUNG AUF DER BASIS VON ALLYL-MONOMEREN UND PEROXIDEN ZUR HERSTELLUNG VON ORGANISCHEN GLÄSERN

COMPOSITION BASED ON ALLYL MONOMERS AND PEROXIDE(S) FOR THE MANUFACTURE OF ORGANIC GLASSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.10.2016 FR 1660378**

(43) Date de publication de la demande:
**06.03.2019 Bulletin 2019/10**

(73) Titulaire: **Arkema France**
**92700 Colombes (FR)**

(72) Inventeurs:
- **LAFARGE, Mélanie**
  **Suresnes 92150 (FR)**
- **VAN HEMELRYCK, Bruno**
  **69630 Chaponost (FR)**
- **DISSON, Jean-Pierre**
  **69390 Vernaison (FR)**

(74) Mandataire: **Arkema Patent**
**Arkema France**
**DRD-DPI**
**420, rue d'Estienne d'Orves**
**92705 Colombes Cedex (FR)**

(56) Documents cités:
**EP-A2- 0 332 386** **DE-A1- 4 012 187**

- **DATABASE WPI Week 199621 Thomson Scientific, London, GB; AN 1996-205546 XP002771950, -& JP H08 73514 A (NIPPON OILS & FATS CO LTD) 19 mars 1996 (1996-03-19)**

Remarques:
Le dossier contient des informations techniques présentées postérieurement au dépôt de la demande et ne figurant pas dans le présent fascicule.

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC):
(Cont.)

C-Sets
**G02B 1/041, C08L 31/00;**
**G02B 1/043, C08L 31/00**

## Description

La présente invention concerne l'utilisation d'un ou plusieurs peroxydes organiques particuliers pour la polymérisation d'au moins un monomère allylique et/ou d'au moins un copolymère allylique.

L'invention se rapporte également à une composition polymérisable comprenant au moins un monomère allylique et/ou au moins un copolymère allylique et au moins un peroxyde organique ayant la structure telle que définie ci-après.

L'invention se rapporte également à l'utilisation de la composition, telle que définie précédemment, pour la fabrication d'un verre organique, de préférence une lentille ophtalmique pouvant être teintée à l'aide de pigments et/ou de colorants organiques, c'est-à-dire à l'aide d'au moins un agent colorant.

La présente invention est aussi relative à un procédé de préparation d'un verre organique à partir de la polymérisation de la composition telle que définie précédemment ainsi qu'au verre organique lui-même.

Les verres organiques, tels que les fenêtres d'instruments ou de détecteurs optiques ou bien encore les lentilles ophtalmiques, peuvent être préparés à partir de la polymérisation radicalaire d'un ou plusieurs monomères allyliques et/ou de copolymères allyliques en présence d'un ou plusieurs initiateurs de polymérisation, en particulier des peroxydes organiques.

A titre d'exemple, cette polymérisation peut être mise en oeuvre lors d'un procédé impliquant une étape de moulage. Dans ce cas, la composition contenant le mélange de monomères allyliques et/ou de copolymères allyliques en présence d'amorceurs de polymérisation peut être versée dans un moule, susceptible de présenter une forme sensiblement concave ou convexe, puis polymérisée et durcie lors d'une augmentation plus ou moins progressive de la température. Une fois la polymérisation terminée, on obtient un verre organique qui peut alors subir différents types de traitement en fonction des applications souhaitées. En variante, la composition peut tout aussi bien être versée entre deux moules de manière à récupérer, après polymérisation, le verre organique correspondant.

Cependant, les peroxydes organiques, régulièrement utilisés en tant qu'initiateurs de polymérisation, sont des espèces généralement très instables lorsqu'elles sont chauffées. En effet, en cas d'élévation incontrôlée de la température, certains peroxydes organiques peuvent subir une décomposition exothermique auto-accélérée et risquent de s'enflammer et/ou d'exploser de manière violente. Un tel comportement s'avère donc difficilement compatible notamment avec les règles en vigueur pour le transport et le stockage de matières dangereuses dans des endroits destinés à la production de verres organiques.

Ainsi il s'avère particulièrement avantageux de formuler sous forme liquide les peroxydes organiques dans des solvants (aussi appelés phlegmatisants), c'est-à-dire à l'état dilué, afin de diminuer leur instabilité thermique de manière à pouvoir ensuite les stocker et transporter en sécurité.

A cet effet, les peroxydes organiques appartenant à la famille des dialkyle peroxydicarbonates peuvent être solubilisés dans un monomère allylique tel que le diéthylène glycol bis (allyl carbonate)(ou ADC), commercialisé par exemple sous le nom de CR-39® par la société PPG ou sous le nom de RAV 7 par la société Acomon du groupe Mitsui. Dans ce cas, le monomère allylique joue le rôle d'un phlegmatisant réactif ce qui signifie qu'il a pour fonction, d'une part, de solubiliser le peroxyde organique et, d'autre part, d'intervenir dans la polymérisation radicalaire des monomères allyliques et/ou des copolymères allyliques conduisant à la formation des verres organiques.

En particulier, l'utilisation de diisopropyl peroxydicarbonate (souvent appelé IPP), solubilisé dans le diéthylène glycol bis (allyl carbonate) à une teneur de 27% en poids par rapport au poids total de la composition, au cours de la polymérisation radicalaire de monomère(s) allylique(s) et/ou des copolymères allyliques permet de conduire à des verres organiques ayant de bonnes propriétés optiques, notamment en termes de transparence et de faible coloration, ainsi qu'à de bonnes propriétés mécaniques. En d'autres termes, les verres organiques obtenus avec une telle composition de peroxyde organique sont transparents, incolores et présentent de bonnes propriétés mécaniques en termes d'usure. Une telle composition à base de peroxyde organique est par exemple commercialisée sous la dénomination Luperox ® IPP27 par la société Arkema ou sous la dénomination commerciale Perkadox ® IPP-NS27 par la société Akzo.

Toutefois, la composition à base de diisopropyl peroxydicarbonate comporte encore un risque trop important de décomposition non contrôlée au stockage et au transport en cas d'une élévation incontrôlée de la température.

En effet, le diisopropyl peroxydicarbonate est un peroxyde dit froid c'est-à-dire qu'il présente seul ou en mélange, avec d'autres peroxydes et/ou des phlegmatisants réactifs ou non, une température maximale de transport, encore appelée température de contrôle, fixée à 20°C conformément aux recommandations pour le transport des matières dangereuses UN, 19ème édition de 2015, dans la section 2.5.3.2.4 relative aux peroxydes organiques.

Plus généralement, au sens de la présente invention, par peroxyde froid, on entend toute composition à base de peroxyde ayant une température maximale de transport telle que définie ci-avant.

Ainsi, en dépit de la dilution du diisopropyl peroxydicarbonate dans le monomère allylique, il s'avère nécessaire de se placer constamment à une température inférieure ou égale à 20°C lors de la circulation de produits tels que le Luperox ® IPP27 ou le Perkadox ® IPP-NS27 afin de minimiser notamment les risques de décomposition incontrôlée, ce qui complique de manière importante les conditions de transport et de stockage.

De plus, il est nécessaire de contrôler la température lors du transport et du stockage de ces produits de manière à réduire les risques de début de polymérisation du monomère allylique ayant pour fonction de phlegmatiser le peroxyde organique.

Par ailleurs, le diisopropyl peroxydicarbonate présente l'inconvénient d'être trop réactif pour être stocké et transporté à des concentrations plus élevées que 30% en poids dans le monomère allylique.

Dans l'état de la technique, il a déjà été envisagé de remplacer le diisopropyl peroxydicarbonate en tant amorceur dans une polymérisation radicalaire à base de monomères allyliques pour la fabrication de verres organiques dans le but de remédier aux inconvénients liés aux problèmes de sécurité précédemment exposés.

A titre d'exemples, des peroxydes aromatiques de type diacyles ou peresters ont déjà été utilisés.

Néanmoins, ce type de peroxydes organiques, en particulier le peroxyde de benzoyle, induit un fort jaunissement des verres organiques. En outre, les peresters présentent aussi le désavantage d'être faiblement solubles dans les monomères allyliques et induisent aux verres organiques des propriétés mécaniques jugées trop faibles. C'est le cas notamment des peresters vendus sous la dénomination commerciale Luperox® 575 (tert-amyl peroxy-2-éthylhexanoate), Luperox ® 256 (2,5-diméthyl-2,5-di(2-éthylhexanoyl)peroxy)-hexane).

De la même façon, les hydroxyperoxydes d'alkyle tel que le tert-butyl hydroperoxyde ont également été envisagés.

Cependant, de tels peroxydes présentent le désavantage de générer des radicaux libres à des températures trop élevées par rapport à celles des dialkyle peroxydicarbonates afin de réaliser efficacement la polymérisation radicalaire des monomères allyliques. En effet, la température de demi-vie (Half Life Température en langue anglaise ou HLT) des hydroxyperoxydes d'alkyle, i.e. la température à laquelle la moitié de la quantité de peroxyde est décomposée dans un temps donné pour un temps de décomposition du même ordre de grandeur que la durée de polymérisation des monomères allyliques, s'avère trop élevée de l'ordre de plusieurs dizaines de degrés. Afin de générer des radicaux libres à des températures plus faibles, des systèmes d'activation chimique, tels que des ions ferreux, ont été ajoutés mais ces derniers se sont révélés inadaptés en raison de la coloration induite dans le polymère obtenu ce qui impacte négativement sur la qualité optique des verres organiques. De plus, ces systèmes hydroxyperoxydes activés sont difficilement solubles dans les monomères allyliques.

Parmi les familles de peroxydes organiques envisagés ayant une température de demi vie inférieure à 130 degrés pour une durée de 10 heures, des perkétals cycliques, tels que ceux vendus sous la dénomination commerciale Luperox ® 331 ou Trigonox ® 22 (1,1-di(t-butylperoxy)-cyclohexane) ou encore la dénomination commerciale Luperox ® 531 ou Trigonox ® 122 (1,1-di(t-amyl peroxy)-cyclohexane), ont été testés. De tels peroxydes organiques présentent l'avantage de pouvoir être stockés et transportés à température ambiante et ne sont pas soumis à une température maximale de transport selon les recommandations pour le transport des matières dangereuses UN telles que mentionnées précédemment.

Cependant, les peroxydes organiques, employés dans ces produits commerciaux, sont dilués dans un solvant tel qu'un hydrocarbure, une huile minérale ou un phtalate, ce qui a pour conséquence de dégrader les qualités optiques et mécaniques des verres organiques récupérés après polymérisation. En effet, ces produits présentent le désavantage d'introduire, pour des raisons de sécurité, un troisième corps non polymérisable dans la polymérisation radicalaire des monomères allyliques augmentant de cette façon les risques d'hétérogénéité dans le polymère finalement obtenu.

En variante, l'utilisation d'autres percarbonates, tels que ceux vendus sous la dénomination commerciale Luperox ® 221 ou 225 (respectivement percarbonate de di-n-propyle et percarbonate de di-sec-butyl), a également été envisagé car ces derniers conduisent à des verres organiques ayant de bonnes propriétés optiques ou mécaniques. Par contre, ces percarbonates correspondent encore à des peroxydes froids et posent les mêmes problèmes de sécurité en matière de transport et de stockage que les compositions à base du diisopropyl peroxydicarbonate.

Il en résulte que les peroxydes classiques conduisent le plus souvent à des verres organiques ayant des propriétés mécaniques et optiques plus faibles que celles des verres organiques obtenus avec des peroxydes froids.

Ainsi l'un des objectifs de la présente invention est de surmonter les inconvénients précédemment mentionnés, c'est-à-dire de substituer les peroxydes organiques, couramment utilisés lors de la polymérisation radicalaire de monomères allyliques et/ou de copolymères allyliques, par d'autres amorceurs de polymérisation qui sont susceptibles de pouvoir être stockés et transportés seuls ou en mélange en toute sécurité sans dégrader les propriétés optiques et mécaniques des verres organiques obtenus.

En d'autres termes, il existe un réel de besoin de proposer d'autres amorceurs de polymérisation qui sont susceptibles d'être stockés et transportés, seuls ou mélange, dans des conditions de température strictement supérieures à 20°C tout en permettant la fabrication de verres organiques ayant de bonnes propriétés optiques et mécaniques, notamment en termes de transparence, de faible coloration et d'usure.

La présente invention a donc notamment pour objet l'utilisation d'au moins un peroxyde de formule (I) suivante :

1-alcoxy-1-t-alkylperoxycyclohexane (I)

Formule (I) dans laquelle le groupement alcoxy comprend de 1 à 4 atomes de carbone, le groupement t-alkyl comprend de 4 à 12 atomes de carbone, et le cycle cyclohexane est éventuellement substitué par 1 ou 3 groupements alkyle, chacun comportant de 1 à 3 atomes de carbone ;
pour la polymérisation d'un ou plusieurs monomères allyliques et/ou de copolymères allyliques.

Les peroxydes de formule (I) ont l'avantage de présenter, seul ou en mélange, avec d'autres peroxydes et/ou des phlegmatisants réactifs ou non, une température maximale de transport, encore appelée température de contrôle, strictement supérieure à 20°C conformément aux recommandations pour le transport des matières dangereuses UN, 19$^{ème}$ édition de 2015, dans la section 2.5.3.2.4 relative aux peroxydes organiques.

Ainsi l'utilisation de peroxydes de formule (I), seuls ou en mélange, permet d'améliorer les conditions de sécurité en matière de transport et de stockage par rapport aux peroxydes froids, tels que définis ci-avant, notamment vis-à-vis des peroxydes organiques appartenant à la famille des dialkyle peroxydicarbonates, en particulier le diisopropyl peroxydicarbonate solubilisé dans le diéthylène glycol bis (allyl carbonate), et commercialisés sous la dénomination Luperox ® IPP27 ou la dénomination Perkadox ® IPP-NS27.

De cette façon, les peroxydes selon l'invention sont plus facilement manipulables et ceci en toute sécurité ce qui permet de diminuer de manière importante les coûts liés au transport et au stockage.

Les peroxydes de formule (I) présentent également l'avantage de pouvoir être utilisés seuls, c'est-à-dire à l'état non dilué, ce qui permet de s'affranchir, d'une part, de l'utilisation d'un solvant non polymérisable, tel que des huiles, imposé pour des raisons de sécurité et susceptible d'impacter négativement sur les qualités optiques et mécaniques des verres organiques obtenus et, d'autre part, de l'utilisation d'un solvant polymérisable, tel qu'un monomère allylique, susceptible d'augmenter les risques au transport ou au stockage d'un début de polymérisation non régulée en température.

Plus généralement, les peroxydes de formule (I) permettent de s'affranchir de la mise en place de tout type de stockage dédié au solvant polymérisable ou non sur les sites de production de peroxyde (ou de dispositif destiné à stocker un solvant) ce qui conduit à un gain de place important et à la réduction des dépenses de maintenance.

Autrement dit, les peroxydes selon l'invention permettent de s'affranchir de tout type de problèmes liés à l'emploi de solvants polymérisables ou non.

Plus particulièrement, les peroxydes selon l'invention permettent de s'affranchir des phlegmatisants habituels des peroxydes tels que les hydrocarbures, tels que l'isododécane, les huiles minérales, les esters comme les phtalates liquides, l'éthylbenzène, les monomères allyliques.

Ainsi les peroxydes de formule (I) peuvent être conditionnés dans une plus grande variété de récipients ou de dispositifs que les peroxydes classiques instables thermiquement et susceptibles de se décomposer lors d'une augmentation incontrôlée de la température.

Les peroxydes selon l'invention disposent d'une température de demi-vie à 10 heures (HLT 10h) susceptible de permettre une polymérisation radicalaire efficace des monomères allyliques et/ou des copolymères allyliques.

De préférence, les peroxydes selon l'invention disposent d'une température de demi-vie à 1 heure (HLT 1h) proche de la température de polymérisation.

De préférence, la température de polymérisation de la composition selon l'invention est de plus ou moins 20°C par rapport à la température de demi-vie à 1 heure du peroxyde utilisé, de préférence plus ou moins 10°C par rapport à la température de demi-vie à 1 heure du peroxyde.

Dans le cas d'un mélange de peroxydes, la température de polymérisation est de plus ou moins 20°C par rapport à la température de demi-vie à 1 heure du peroxyde ayant la HLT la plus élevée, de préférence plus ou moins 10°C par rapport à la température de demi-vie à 1 heure du peroxyde ayant la HLT la plus élevée,

Par « température de polymérisation », on entend la température maximale atteinte pendant le cycle thermique de réticulation.

Ainsi les peroxydes envisagés peuvent amorcer la polymérisation des monomères allyliques et/ou des copolymères allyliques sans nécessairement avoir recours à des systèmes destinés à les activer chimiquement, tels que des ions ferreux, ce qui évite les risques de coloration des verres organiques.

Par ailleurs, les verres organiques obtenus, suite à la polymérisation d'un ou plusieurs monomères allyliques et/ou de copolymères allyliques en présence d'un ou plusieurs peroxydes de formule (I), présentent de bonnes propriétés optiques et mécaniques.

En particulier, les verres organiques obtenus sont transparents, faiblement colorés voire incolores, et sont résistants à l'usure.

Ainsi le ou les peroxydes de formule (I), utilisés lors de la polymérisation d'un ou plusieurs monomères allyliques et/ou copolymères allyliques, permettent de fabriquer des verres organiques.

L'invention a également pour objet une composition comprenant au moins un peroxyde de formule (I) telle que décrite ci-avant, et au moins un monomère allylique et/ou au moins un copolymère allylique.

La composition selon l'invention permet de conduire après polymérisation à des verres organiques ayant de bonnes propriétés optiques et mécaniques.

La composition selon l'invention est donc polymérisable ou susceptible de se polymériscr.

Un autre objet de la présente invention concerne un verre organique obtenu par polymérisation de la composition telle que définie précédemment.

De même, l'invention est relative à un procédé de préparation d'un verre organique comprenant au moins une étape de polymérisation d'une composition telle que définie précédemment dans un dispositif comportant un moule.

D'autres caractéristiques et avantages de l'invention apparaîtront plus clairement à la lecture de la description et des exemples qui suivent.

L'expression « au moins un » est équivalente à l'expression « un ou plusieurs ».

Utilisation

Comme indiqué précédemment, l'invention se rapporte à l'utilisation d'un ou plusieurs peroxydes de formule (I), en tant qu'amorceur de polymérisation d'un ou plusieurs monomères allyliques et/ou d'un ou plusieurs copolymères allyliques.

Ainsi l'invention se rapporte notamment à l'utilisation d'un ou plusieurs peroxydes de formule (I) pour la polymérisation radicalaire d'un ou plusieurs monomères allyliques et/ou d'un ou plusieurs copolymères allyliques.

En d'autres termes, le ou les peroxydes de formule (I) est ou sont utilisés notamment en tant qu'amorceur de polymérisation radicalaire.

Le ou les peroxydes de formule (I) peuvent être utilisés seuls ou en mélange, notamment avec d'autres initiateurs de polymérisation au cours de la polymérisation d'un ou plusieurs monomères allyliques et/ou d'un ou plusieurs copolymères allyliques.

De préférence, le ou les peroxydes de formule (I) sont utilisés seuls.

Alternativement, le ou les peroxydes de formule (I) peuvent être utilisés en mélange avec un ou plusieurs peroxydes de formule (III) :

bis-t-alkylperoxycyclohexane (III)

Formule (III) dans laquelle chaque groupement t-alkyle comprend de 4 à 12 atomes de carbone et le cycle cyclohexane est éventuellement substitué par 1 ou 3 groupements alkyle, chacun comportant de 1 à 3 atomes de carbone.

De préférence, le composé de formule (III) est choisi dans le groupe constitué par le 1,1-di(tert-butylperoxy)-3,3,5-trimethylcyclohexane, le 1,1-di(tert-amyl peroxy)-cyclohexane, le 1,1-di(t-butylperoxy)-cyclohexane et des mélanges de ceux-ci.

Un mélange particulièrement préféré comprend le 1-méthoxy-1-tert-amylperoxycyclohexane en tant que composé de formule (I) et au moins un composé de formule (III), de préférence choisi dans le constitué par le 1,1-di(tert-butylperoxy)-3,3,5-trimethylcyclohexane, le 1,1-di(tert-amyl peroxy)-cyclohexane, le 1,1-di(t-butylperoxy)-cyclohexane et des mélanges de ceux-ci.

De préférence, lorsque le ou les peroxydes de formule (I) sont utilisés en mélange avec un ou plusieurs autres initiateurs de polymérisation, de préférence avec un ou plusieurs peroxydes de formule (III), le ratio entre le ou les composés de formule (I) et le ou les autres initiateurs de polymérisation, de préférence un ou plusieurs peroxydes de formule (III), est compris entre 99:1 et 30:70, de préférence entre 50:50 et 99:1, encore préférentiellement entre 60:40 et 80:20.

Peroxyde de formule (I)

Le ou les peroxydes selon l'invention présentent une structure de formule (I) :

1-alcoxy-1-t-alkylperoxycyclohexane (I)

Formule (I) dans laquelle le groupement alcoxy comprend de 1 à 4 atomes de carbone, le groupement t-alkyl comprend de 4 à 12 atomes de carbone, et le cycle cyclohexane est éventuellement substitué par 1 ou 3 groupements alkyle, chacun comportant de 1 à 3 atomes de carbone.

De préférence, dans la formule (I), le groupement alcoxy correspond à un groupement méthoxy ou éthoxy, préférentiellement à un groupement méthoxy.

De préférence, dans la formule (I), le groupement t-alkyl comprend de 4 à 8 atomes de carbone, préférentiellement quatre ou cinq atomes de carbone, plus préférentiellement cinq atomes de carbone.

Selon un mode de réalisation, le cycle cyclohexane est substitué par 1 ou 3 groupements alkyle, chacun comportant de 1 à 3 atomes de carbone, préférentiellement est substitué par trois groupements alkyle ayant chacun un atome de carbone.

De préférence, le ou les peroxydes de formule (I) est ou sont choisis parmi le 1-méthoxy-1-tert-amylperoxycyclohexane (TAPMC), le 1-méthoxy-1-t-butylperoxycyclohexane (TBPMC), le 1-méthoxy-1-t-amylperoxy-3,3,5-triméthylcyclohexane, le 1-méthoxy-1-t-butylperoxy-3,3,5-triméthylcyclohexane, le 1-éthoxy-1-t-amylperoxycyclohexane (TAPEC), le 1-éthoxy-1-t-butylperoxycyclohexane (TBPEC), le 1-éthoxy-1-t-amylperoxy-3,3,5-trimethylcyclohexane et/ou le 1-éthoxy-1-t-butylperoxy-3,3,5-trimethylcyclohexane.

Plus préférentiellement, le peroxyde de formule (I) est le 1-méthoxy-1-tert-amylperoxycyclohexane (TAPMC) tel que vendu sous la dénomination commerciale Luperox ®V10 par la Société Arkema.

Avantageusement, le ou les peroxydes de formule (I) présent(ent) une température de demi-vie à 10 heures, dénotée HLT 10h, supérieure ou égale à 60°C et inférieure ou égale à 130°C.

<u>Mélanges</u>

Le ou les peroxydes de formule (I) peuvent être utilisés en mélange, notamment avec d'autres initiateurs de polymérisation.

De préférence, le ou les peroxydes de formule (I) peuvent être utilisés en mélange avec un ou plusieurs peroxydes de formule (III) :

bis-t-alkylperoxycyclohexane (III)

Formule (III) dans laquelle chaque groupement t-alkyle comprend de 4 à 12 atomes de carbone et le cycle cyclohexane est éventuellement substitué par 1 ou 3 groupements alkyle, chacun comportant de 1 à 3 atomes de carbone.

De préférence, le composé de formule (III) est choisi dans le groupe constitué par le 1,1-di(tert-butylperoxy)-3,3,5-trimethylcyclohexane, le 1,1-di(tert-amyl peroxy)-cyclohexane, le 1,1-di(t-butylperoxy)-cyclohexane et des mélanges de ceux-ci.

Un mélange particulièrement préféré comprend le 1-méthoxy-1-tert-amylperoxycyclohexane en tant que composé de formule (I) et au moins un composé de formule (III), de préférence choisi dans le constitué par le 1,1-di(tert-butylperoxy)-3,3,5-trimethylcyclohexane, le 1,1-di(tert-amyl peroxy)-cyclohexane, le 1,1-di(t-butylperoxy)-cyclohexane et des mélanges de ceux-ci.

De préférence, lorsque le ou les peroxydes de formule (I) sont utilisés en mélange avec un ou plusieurs autres initiateurs de polymérisation, de préférence avec un ou plusieurs peroxydes de formule (III), le ratio entre le ou les composés de formule (I) et le ou les autres initiateurs de polymérisation, de préférence un ou plusieurs peroxydes de formule (III), est compris entre 99:1 et 30:70, de préférence entre 50:50 et 99:1, encore préférentiellement entre 60:40 et 80:20.

<u>Monomère(s) allylique(s) et/ou copolymère(s) allylique(s)</u>

Le ou les monomères allyliques peuvent être choisis parmi les monomères bis(allyl carbonate).

Avantageusement, le ou les monomères allyliques est ou sont choisis parmi les monomères bis(allyl carbonate) de diol de formule (II) suivante :

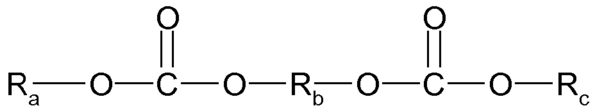

Formule (II) dans laquelle :

- $R_a$ et $R_c$, identiques ou différents, représentent un groupement allyle de formule suivante :

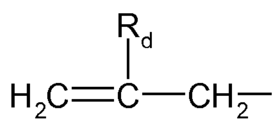

Formule dans laquelle $R_d$ est choisi parmi :

- un atome d'hydrogène,
- un atome d'halogène, de préférence un atome de fluor ou de chlore,

- un groupement alkyle, linéaire ou ramifié, en $C_1$-$C_4$,

- $R_b$ est choisi parmi les groupes alkylène, les groupes éther d'alkylène, les groupes éther d'alkylène aromatique, les groupes polyéther d'alkylène, les groupes carbonate d'alkylène et leurs mélanges.

De préférence, dans la formule (II), $R_a$ et $R_c$ sont identiques.
Préférentiellement, $R_a$ et $R_c$ sont identiques et représentent un groupement allyle dans lequel $R_d$ représente un atome d'hydrogène, un atome de chlore, un atome de brome, un groupement méthyle ou éthyle.
Plus préférentiellement encore, $R_a$ et $R_c$ sont identiques et représentent un groupement allyle dans lequel $R_d$ représente un atome d'hydrogène.
De préférence, $R_b$ représente un groupe alkylène, un groupe éther d'alkylène ou un groupe éther d'alkylène aromatique.
Plus préférentiellement, $R_b$ représente un groupe alkylène ou un groupe éther d'alkylène.
Encore plus préférentiellement, $R_b$ représente un groupe éther d'alkylène, notamment le groupe de formule suivante :

$$-CH_2CH_2-O-CH_2-CH_2-$$

Dans la formule (II), $R_b$ est de préférence aliphatique, c'est-à-dire qu'il ne représente pas un groupe éther d'alkylène aromatique. En d'autres termes, le ou les monomères allyliques est ou sont préférentiellement choisis parmi les monomères bis(allyl carbonate) de diol aliphatique de formule (II).
Le ou les monomères allyliques est ou sont de préférence choisi(s) parmi l'éthylèneglycol bis allyl carbonate, le diéthylène glycol bis 2-méthyl carbonate, le diéthylèneglycol bis (allyl carbonate) ou ADC, l'éthylèneglycol bis (2-chloro allyl carbonate), le triéthylèneglycol bis (allyl carbonate), le 1,3-propanediol bis (allyl carbonate), le propylène glycol bis (2-éthyl allyl carbonate), le 1,3-butènediol bis (allyl carbonate), le 1,4-butènediol bis (2-bromo allyl carbonate), le dipropylèneglycol bis (allyl carbonate), le triméthylèneglycol bis (2-éthyl allyl carbonate), le pentaméthylèneglycol bis (allyl carbonate), l'isopropylène bis phénol-A bis (allyl carbonate) et leurs mélanges.
De préférence, le monomère allylique est le diéthylèneglycol bis (allyl carbonate), encore appelé ADC, tel que celui vendu sous la dénomination commerciale CR-39 par la société PPG ou RAV 7 par la société Acomon du groupe Mitsui.
D'autres monomères allyliques peuvent être utilisés seuls ou en combinaison avec les monomères bis(allyl carbonate) de diol précédemment cités tels que par exemple les monomères bis(allyl carbonate) ne comportant pas de diol dans leur structure.
Le ou les copolymères allyliques peuvent être obtenus à partir de la polymérisation des monomères bis(allyl carbonate) de diol précédemment cités.
Le ou les copolymères allyliques est ou sont de préférence choisis parmi les poly(allyl carbonates) de polyol.
Le ou les poly(allyl carbonates) de polyols est ou sont obtenu(s) à partir de la polymérisation d'un polyol et d'un monomère bis(allyl) carbonate.
Parmi les polyols entrant dans la préparation des poly(allyl carbonates) de polyols, on peut notamment citer les polyols choisis parmi le 1,6-hexanediol, le 1,4-diméthanol cyclohexane, les diols de polylactone, les diols de glycérol polyéthoxylés, l'alpha, alpha-xylènediol, le 1,4-bis(hydroxyéthyl) toluène, le 2,2-(bis(4-hydroxyéthyl)phényl) propane, le pentaérythritol, le triméthylol propane, le dipentaérythritol, le ditriméthylol propane, le tris(hydroxyethyl) isocyanurate.
Le ou les copolymères allyliques choisis parmi les poly(allyl carbonates) de polyol peuvent être utilisés en combinaison avec les monomères allyliques précédemment cités, notamment les monomères bis(allyl carbonate) de diol de formule (II).
Le ou les copolymères allyliques peuvent être également obtenu(s) à partir de la polymérisation d'un monomère bis(allyl)carbonate et d'un polyéther de diol.
Le polyéther de diol est de préférence choisi parmi les homopolymères, les copolymères ou les polymères blocs de polyéthers diols tels que ceux décrits dans la demande de brevet US 6506864.
De préférence, l'invention est relative à l'utilisation d'au moins un peroxyde de formule (I) pour la polymérisation radicalaire d'un ou plusieurs monomères allyliques, de préférence ceux choisis parmi les monomères bis(allyl carbonate) de diol de formule (II).
Plus préférentiellement, l'invention est relative à l'utilisation du 1-méthoxy-1-tert-amylperoxycyclohexane (TAPMC) pour la polymérisation radicalaire du diéthylèneglycol bis (allyl carbonate)(ADC).

## Composition

Comme indiqué précédemment, la composition selon l'invention comprend au moins un monomère allylique

et/ou au moins un copolymère allylique et au moins un initiateur de polymérisation choisi parmi les peroxydes de formule (I) telle que décrite ci-avant.

De préférence, la composition comprend au moins un monomère allylique.

De préférence, la composition comprend au moins un monomère allylique choisi parmi les monomères bis(allyl carbonate).

De préférence, la composition comprend au moins un monomère allylique choisi parmi les monomères bis(allyl carbonate) de diol de formule (II), telle que décrite précédemment, notamment les monomères bis(allyl carbonate) de diol aliphatique de formule (II).

Selon un mode de réalisation, la composition comprend au moins un peroxyde de formule (I), dans laquelle le groupement alcoxy correspond à un groupement méthoxy ou éthoxy, et au moins un monomère allylique choisi parmi les monomères bis(allyl carbonate) de diol de formule (II), dans laquelle $R_a$ et $R_c$ sont identiques et représentent un groupement allyle dans lequel $R_d$ représente un atome d'hydrogène, et $R_b$ représente un groupe alkylène ou un groupe éther d'alkylène.

De préférence, la composition comprend le 1-méthoxy-1-tert-amylperoxycyclohexane et au moins un monomère allylique choisi parmi les monomères bis(allyl carbonate) de diol de formule (II) telle que décrite précédemment.

Plus préférentiellement, la composition comprend le diéthylèneglycol bis (allyl carbonate) et le 1-méthoxy-1-tert-amylperoxycyclohexane.

Le ou les peroxydes peuvent être présents dans la composition selon l'invention dans une teneur allant de 0,01 à 10%, de préférence allant de 0,01 à 5% en poids par rapport au poids total du ou des monomères allyliques et/ou des copolymères allyliques présents dans la composition.

De préférence, le ou les peroxydes peuvent être présents dans la composition selon l'invention dans une teneur allant de 0,01 à 10%, de préférence allant de 0,01 à 5% en poids par rapport au poids total du ou des monomères allyliques présents dans la composition.

La composition selon l'invention peut également comprendre au moins un initiateur de polymérisation différent des peroxydes organiques de formule (I).

Dans ce cas, l'initiateur de polymérisation peut être un peroxyde organique additionnel différent des peroxydes organiques de formule (I) ou un composé non peroxyde.

En particulier, la composition selon l'invention peut également comprendre au moins un peroxyde organique additionnel différent des peroxydes organiques de formule (I).

De préférence, le ou les peroxyde(s) organique(s) additionnel(s) est ou sont choisis parmi les peroxydes de formule (III) :

bis-t-alkylperoxycyclohexane (III)

Formule (III) dans laquelle chaque groupement t-alkyle comprend de 4 à 12 atomes de carbone et le cycle cyclohexane est éventuellement substitué par 1 ou 3 groupements alkyle, chacun comportant de 1 à 3 atomes de carbone.

De préférence, le composé de formule (III) est choisi dans le groupe constitué par le 1,1-di(tert-butylperoxy)-3,3,5-trimethylcyclohexane, le 1,1-di(tert-amyl peroxy)-cyclohexane, le 1,1-di(t-butylperoxy)-cyclohexane et des mélanges de ceux-ci.

Un mélange particulièrement préféré comprend le 1-méthoxy-1-tert-amylperoxycyclohexane en tant que composé de formule (I) et au moins un composé de formule (III), de préférence choisi dans le groupe constitué par le 1,1-di(tert-butylperoxy)-3,3,5-trimethylcyclohexane, le 1,1-di(tert-amylperoxy)-cyclohexane, le 1,1-di(t-butylperoxy)-cyclohexane et des mélanges de ceux-ci.

De préférence, lorsque le ou les peroxydes de formule (I) sont utilisés en mélange avec au moins un peroxyde additionnel différent des peroxydes de formule (I), de préférence choisi parmi les peroxydes de formule (III), le ratio entre le ou les peroxydes de formule (I) et le au moins un peroxyde additionnel différent des peroxydes de formule (I), de préférence choisi parmi les peroxydes de formule (III), est compris entre 99:1 et 30:70, de préférence entre 50:50 et 99:1, encore préférentiellement entre 60:40 et 80:20.

La composition selon l'invention peut également comprendre un ou plusieurs photoinitiateurs tels que ceux choisis parmi les dérivés d'acétophénone et de benzophénone.

La composition selon l'invention peut également comprendre un ou plusieurs monomères additionnels différents des monomères allyliques.

Le ou les monomères additionnels est ou sont choisis parmi les monomères acryliques ou les monomères méthacryliques tels que ceux choisis parmi l'acrylate de méthyle, le méthacrylate de méthyle, le méthacrylate de phényle, l'acétate de vinyle, l'isophtalate d'isoallyle, le diallyl téréphtalate et le diallyl adipate.

La composition selon l'invention peut également comprendre au moins un pigment et/ou au moins un colorant organique, c'est-à-dire au moins un agent colorant.

Dans ce cas, la composition peut également comprendre au moins un agent dispersant ayant pour fonction

de disperser le ou les pigments au sein de ladite composition.

Selon un mode de réalisation préférée, la composition comprend le diéthylèneglycol bis (allyl carbonate) et le 1-méthoxy-1-tert-amylperoxycyclohexane et au moins un pigment et/ou un colorant organique et éventuellement au moins un agent dispersant.

De préférence, l'agent colorant est un pigment.

Le pigment pouvant être présent dans la composition peut être organique ou inorganique.

Parmi les pigments inorganiques, on peut notamment citer les pigments minéraux qui peuvent être éventuellement traités en surface.

Le ou les pigments minéraux sont de préférence choisis parmi les oxydes de titane, notamment le dioxyde de titane, les oxydes de fer tels que l'oxyde de fer rouge, l'oxyde de fer jaune, et les oxydes de zirconium.

Les pigments organiques peuvent être choisis parmi le phthalocyanine bleu, les phthalocyanine vert, le chromophtal violet et le chromophtal oxydé vert.

Parmi les pigments, on peut notamment citer les pigments phthalocyanines, en particulier les pigments phthalocyanines de cuivre, notamment le pigment phthalocyanine de cuivre bleu, et les oxydes de fer.

Selon un mode de réalisation, les pigments sont inorganiques.

Avantageusement, les pigments sont organiques.

La composition selon l'invention est notamment liquide à température ambiante, c'est-à-dire liquide à une température comprise entre 10°C et 30°C, préférentiellement encore entre 15°C et 25°C.

La composition selon l'invention telle que définie précédemment est une composition polymérisable, c'est-à-dire qu'elle est susceptible de se polymériser sous l'action de la chaleur, en particulier à au moins une température allant de 40 à 140°C.

L'invention porte également sur l'utilisation de la composition polymérisable telle que définie précédemment pour la fabrication d'un verre organique, de préférence une lentille ophtalmique pouvant être teintée à l'aide de pigments et/ou de colorants organiques.

De préférence, la composition selon l'invention peut comprendre un agent de démoulage, tel que le Zelec® UN.

Verre organique

La composition polymérisable selon l'invention conduit après polymérisation à un verre organique.

Ainsi la présente invention est aussi relative à un verre organique obtenu à partir de la polymérisation d'une composition telle que définie précédent.

Plus précisément, l'invention se rapporte aussi un verre organique obtenu à partir de la polymérisation radicalaire d'une composition telle que définie précédemment.

Le verre organique est de préférence choisi parmi les fenêtres d'instruments ou de détecteurs optiques ou les lentilles ophtalmiques.

De préférence, le verre organique est choisi parmi les lentilles ophtalmiques.

Au sens de la présente invention, le terme ophtalmique signifie un verre susceptible d'être monté en lunette et dont la fonction est de protéger les yeux, en particulier contre le soleil, notamment les rayons ultraviolets (verre solaire), ou de corriger la vision. Dans ce dernier cas, la lentille ophtalmique est de préférence afocale, unifocale, bifocale, trifocale ou progressive.

Ainsi la lentille ophtalmique peut être de type multifocal ou multifocal progressive ou dégressive, c'est-à-dire des lentilles multifocales à puissance variable.

La lentille ophtalmique obtenue peut être recouverte par un revêtement ou être traitée au niveau de sa surface.

Avantageusement, l'invention est relative à une lentille ophtalmique obtenue à partir de la polymérisation d'une composition telle que définie précédemment.

Selon un mode de réalisation, la lentille ophtalmique est obtenue à partir de la polymérisation d'une composition comprenant le 1-méthoxy-1-tert-amylperoxycyclohexane et au moins un monomère allylique choisi parmi les monomères bis(allyl carbonate) de diol de formule (II) telle que décrite précédemment.

De préférence, la lentille ophtalmique est obtenue à partir de la polymérisation d'une composition comprenant le 1-méthoxy-1-tert-amylperoxycyclohexane et le diéthylèneglycol bis (allyl carbonate).

Selon un mode de réalisation, le verre organique est choisi parmi les lentilles ophtalmiques teintées avec un ou plusieurs pigments et/ou colorants organiques.

Conformément à ce mode de réalisation, la lentille ophtalmique est de préférence obtenue à partir de la polymérisation d'une composition comprenant le 1-méthoxy-1-tert-amylperoxycyclohexane et au moins un monomère allylique choisi parmi les monomères bis(allyl carbonate) de diol de formule (II), telle que décrite précédemment, et un ou plusieurs pigments et/ou colorants organiques.

Plus particulièrement, la lentille ophtalmique est de préférence obtenue à partir de la polymérisation d'une composition comprenant le 1-méthoxy-1-tert-amylperoxycyclohexane, le diéthylèneglycol bis (allyl carbonate) et un ou

plusieurs pigments et/ou colorants organiques.

Produit issu de la composition polymérisable

Un autre objet de la présente invention porte sur le produit issu de la polymérisation d'un ou plusieurs monomères allyliques et/ou d'un ou plusieurs copolymères allyliques en présence d'un ou plusieurs peroxydes de formule (I).

Ainsi le produit est une composition polymère (ou un produit polymère) qui résulte de la polymérisation d'un ou plusieurs monomères allyliques et/ou d'un ou plusieurs copolymères allyliques en présence d'un ou plusieurs peroxydes de formule (I).

La composition polymère est donc issue de la polymérisation de la composition polymérisable telle que définie ci-avant et plus précisément des différents constituants de la composition polymérisable.

En d'autres termes, la composition polymère correspond à une résine qui peut servir de matière de base pour fabriquer tout type d'objet utilisé pour ses bonnes propriétés mécaniques et optiques, notamment pour ses qualités optiques.

De préférence, le produit polymère ou la composition polymère peut être mis en forme de manière à obtenir un verre organique ou tout autre objet utilisé pour ses bonnes propriétés mécaniques et optiques, notamment pour sa transparence et sa faible coloration voire son caractère incolore.

La composition polymère est notamment sous forme solide à température ambiante, c'est-à-dire solide à une température comprise entre 10°C et 30°C, préférentiellement encore entre 15°C et 25°C.

Procédé de préparation de la composition polymère

De même, l'invention se rapporte également à un procédé de préparation de la composition polymère, telle que définie ci-avant, comportant au moins une étape de polymérisation d'une composition polymérisable telle que définie précédemment à une ou des températures allant de 40 à 140°C, de préférence allant de 50 à 130°C, encore de préférence allant de 60 à 130°C.

Procédé de préparation du verre organique

Le procédé de préparation d'un verre organique comprend au moins une étape de polymérisation d'une composition, telle que définie précédemment, à une ou des températures allant de 40 à 140°C, de préférence allant de 50 à 130°C, encore de préférence allant de 60 à 130°C, dans un dispositif comprenant au moins un moule.

Selon un mode de réalisation, le procédé de préparation du verre organique comprend au moins les étapes suivantes:

- une étape d'introduction d'une composition polymérisable, telle que définie précédemment, dans un dispositif comprenant au moins un moule,
- une étape de polymérisation de ladite composition à une ou des températures allant de 40 à 140°C, de préférence allant de 50 à 130°C, encore de préférence allant de 60 à 130°C ; de préférence, l'étape de polymérisation est une succession d'étapes à des températures différentes permettant de contrôler le retrait et la polymérisation,
- une étape de récupération du verre organique.

Conformément à ce mode de réalisation, l'étape d'introduction est une étape de coulée ou d'injection de la composition polymérisable selon l'invention dans un dispositif comprenant au moins un moule.

Le dispositif peut comprendre au moins un moule ayant une géométrie complexe, par exemple un moule biplan, un moule comportant une partie concave et une partie convexe ou encore un moule de forme concave.

De préférence, le dispositif comprend au moins un moule comportant au moins une partie concave et au moins une partie convexe.

Plus généralement, le dispositif comprend au moins un moule dont la forme géométrique présente la géométrie finale du verre organique souhaité.

Le dispositif peut également comprendre au moins un moule ayant une face ayant une géométrie correspondant à la géométrie finale du verre organique souhaité et une autre face qui n'est pas réglée en fonction de la géométrie finale du verre organique mais qui permet de préparer une seconde face du verre organique qui peut être ensuite traitée.

De préférence, l'étape d'introduction consiste à couler la composition polymérisable entre deux moules ayant les géométries de surface requises, par exemple un moule ayant une forme concave et un moule ayant une forme convexe.

Conformément au mode de réalisation, la composition comprend de préférence au moins un peroxyde de formule (I), au moins un monomère allylique choisi parmi les monomères bis(allylique) de diol de formule (II) et au moins

un pigment et/ou au moins un colorant organique.

Selon ce mode de réalisation, la composition peut comprendre au moins un agent dispersant.

L'étape de polymérisation est notamment une polymérisation radicalaire.

L'étape de polymérisation peut être réalisée en effectuant des étapes de traitements thermiques dans une gamme de températures variant de 40 à 140°C, de préférence allant de 50 à 130°C, encore de préférence allant de 60 à 130°C pendant une durée suffisante pour conduire la polymérisation, notamment des durées pouvant aller de 10 heures à 30 heures.

Ainsi la température peut être augmentée progressivement au cours de l'étape de polymérisation.

L'étape de polymérisation permet de conduire au verre organique souhaité.

Le procédé de préparation du verre organique peut comprendre, après l'étape de polymérisation, une étape de recuit du verre organique destinée à éliminer des éventuelles contraintes résiduelles dans le verre. L'étape de recuit peut se dérouler à des températures pouvant aller de 60 à 130°C de préférence 70 à 100°C et ceci pendant une durée pouvant aller d'l heure à 20 heures.

L'étape de récupération du verre organique peut être une étape consistant à ouvrir le moule et collecter le verre organique.

Ainsi le procédé de préparation du verre organique comprend, de préférence, une étape de coulée ou d'injection de la composition selon l'invention dans un dispositif comprenant au moins un moule ayant une géométrie complexe, par exemple un moule bi-plan, un moule comportant une partie concave et une partie convexe ou encore un moule de forme concave, de préférence un moule ayant au moins une partie concave et au moins une partie convexe, une étape consistant à refermer le moule, une étape de polymérisation de la composition telle que définie précédemment, et une étape consistant à ouvrir le moule et collecter le verre organique.

Le procédé selon l'invention permet notamment de préparer une lentille ophtalmique telle que décrite précédemment.

Le verre organique obtenu à la suite de ce procédé de préparation peut subir tout type de traitements tels que des traitements surfacique pour améliorer ses propriétés mécaniques et optiques ou encore ses propriétés de mouillabilité.

Selon un mode de réalisation, comme indiqué ci-avant, la composition polymérisable selon l'invention peut comprendre en outre au moins un agent colorant, de préférence au moins un pigment et/ou au moins un colorant organique.

Alternativement, le procédé de préparation du verre organique selon l'invention peut comprendre une étape additionnelle consistant à ajouter au moins un agent colorant, de préférence au moins un pigment, après l'obtention du verre organique, c'est-à-dire après l'étape de polymérisation.

Le verre organique obtenu à la suite de ce procédé présente de bonnes propriétés mécaniques et optiques.

La qualité optique des verres organiques selon l'invention peut être évaluée en déterminant notamment l'un au moins des paramètres suivants:

- l'indice de réfraction ($n^D_{20}$) mesuré avec un réfractomètre Abbe (méthode standardisée ASTM D-542),
- l'indice de jaunissement (YI) qui peut être obtenu par voie spectroscopique (méthode standardisée ASTM D-1925-63) à l'aide d'un spectrophotomètre Macbeth 1500 Plus selon l'équation suivante :

$$YI = 100/Y(1.277X\text{-}1{,}06Z)$$

Equation dans laquelle X, Y et Z sont des coordonnées trichromatiques de l'échantillon, mesuré par le spectrophotomètre sur l'ensemble du spectre entre 380 et 780 nanomètres, ou avec un Spectro-colorimètre du constructeur X- RITE, type SP60, selon la Norme CIE 1976.

De préférence, l'indice de jaunissement YI, est obtenu avec un Spectro-colorimètre du constructeur X- RITE, type SP60, selon la Norme CIE 1976.

De préférence, l'indice de jaunissement YI du verre organique selon l'invention, selon la Norme CIE 1976, est compris entre -10 et +10, et encore de préférence compris entre -5 et +5 et encore plus préférablement compris entre -1 et +2.

- La valeur de voile (Haze) qui peut être déterminée selon la norme ASTM D 1003.

De préférence, la valeur de voile du verre organique selon l'invention est inférieure à 5, et encore de préférence inférieure à 1, et encore plus préférablement inférieure à 0,5.

Les propriétés mécaniques des verres organiques selon l'invention peuvent être évaluées en déterminant notamment l'un au moins des paramètres suivants:

- la dureté Rockwell mesurée à l'aide d'un appareil de dureté Rockwell (méthode standardisée ASTM D-785),
- La dureté Shore D (méthode standardisée ASTM D 2240; BS 903 Part A26).

De préférence, la dureté Shore D du verre organique selon l'invention est à supérieure à 65,0.

- le module d'élasticité, ou
- le coefficient de friction.

Les exemples suivants servent à illustrer l'invention.

## EXEMPLES

A. Exemple de synthèse du 1-méthoxy-1-t-amylperoxycyclohexane (TAPMC)

On prépare un mélange d'hydroperoxyde de t-amyle (TAHP), de cyclohexanone et de méthanol que l'on traite à l'aide d'acide sulfurique à 70% à une température comprise entre -6 °C et -4 °C.

En quinze minutes, un mélange à l'équilibre de 1-méthoxy-1-t-amylperoxycyclohexane, de 1,1-di-(t-amylperoxy)- cyclohexane et des produits de départ n'ayant pas réagi, cyclohexanone et TAHP, se forme.

Une petite quantité (environ 2%) de cyclohexane-1,1-diméthoxycétal (CDMK) est également obtenue dans le mélange réactionnel.

Le mélange réactionnel est traité par de l'eau froide, puis la phase aqueuse est séparée de la phase organique, qui est purifiée par rinçage.

Ce procédé de fabrication de l'initiateur principal du procédé selon l'invention est donné ici à titre d'exemple, étant entendu que l'homme du métier pourra éventuellement l'obtenir par d'autres moyens bien connus de l'homme du métier. Par ailleurs, il faut noter que des peroxydes organiques appartenant à la même famille (proche, voire très proche du TAPMC) ont été réalisés et montrent les mêmes effets techniques obtenus dans le cadre de la présente invention, à savoir pour la polymérisation de monomères allyliques et/ou de copolymères allyliques.

B. Exemple de préparation d'une composition polymérisable

On prépare une composition polymérisable à base de diéthylène glycol bis(allyl carbonate) (CAS 142-22-3), commercialisé sous la dénomination CR-39® par la société PPG et de 1-méthoxy-1-t-amylperoxycyclohexane (TAPMC). La composition comprend de préférence un agent de démoulage, tel que le Zelec® UN, disponible auprès de la Société Stepan.

Le 1-méthoxy-1-t-amylperoxycyclohexane est présent à une teneur de 4% en poids par rapport au poids du diéthylène glycol bis(allyl carbonate).

C. Exemple de préparation d'un verre organique

On coule ensuite la composition obtenue précédemment dans un moule ayant une partie concave et une partie convexe. Une fois coulée, on referme la partie convexe sur la partie concave du moule puis on chauffe l'ensemble à une température de 90°C. Plusieurs étapes en paliers ou gradients de température allant de 60 à 130°C sont effectués pendant une durée de 10 à 30h.

Le produit polymérisé ainsi obtenu est recuit pendant une durée pouvant varier de 1 à 20 heures à des températures pouvant aller jusqu'à 130°C.

On récupère ensuite le verre organique.

Le verre organique présente de bonnes propriétés optiques et mécaniques conformément à l'un au moins des paramètres précédemment décrits.

D. Système biplan pour mesurer les propriétés optiques

Différentes propriétés optiques, à savoir un indice de jaunissement (YI), une mesure de voile (Haze), et une dureté Shore D ont été mesurées pour différents verres organiques. Ces verres organiques ont été préparés selon le protocole décrit ci-dessus, à l'exception de la polymérisation qui a été réalisée entre plaques de verre planes de 10*15cm d'épaisseur 4 mm, disposées à la verticale, séparées par un joint en caoutchouc silicone de 4 mm de diamètre, la cohésion mécanique de l'ensemble étant réalisée par une pince de serrage à pression constante. Tous les essais ont été réalisés avec une prise d'air en sommet de moule.

L'indice de jaunissement YI, est obtenu avec un Spectro-colorimètre du constructeur X- RITE, type SP60, selon

la Norme CIE 1976 (chaîne de couleurs). Les coordonnées tri-chromatiques sont celles de Lab Hunter. La calibration de la mesure est réalisée chaque jour avec une plaque de calibration standard (blanc et noir), n° série: 20609 D65 :10° du 18/02/2010 WO A89274.

La mesure YI est réalisée dans leur épaisseur du verre de 4 mm et est exprimée par différence avec le YI mesuré sur la zone blanche de la carte Leneta Form 2A (dont la mesure d'indice de jaunissement est 10,48 après calibration du spectrophotomètre).

La valeur de voile (Haze), est déterminées à l'aide d'un Hazemeter : appareil Haze-Gard plus, fabricant BYK-GARDNER, selon la norme ASTM D 1003 (Calibration standard (zéro) n°4733 - Calibration clarté n°4732).

La dureté Shore D est mesurée à l'aide d'un duromètre portatif type HPE II Shore D (Fabricant : BAREISS, appareil Normé NF T51-174; DIN EN ISO 868; ISO 7619; ASTM D 2240; BS 903 Part A26).

Les peroxydes organiques suivants ont été testés :

- peroxydicarbonate de bisisopropyle (CAS 105-64-6) à 27% poids dans le CR-39®, commercialisé par Arkema sous le nom Luperox® IPP27 **(exemple 1 comparatif)** ;
- 1-méthoxy-1-tert-amylperoxycyclohexane (TAPMC) tel que vendu sous la dénomination commerciale Luperox ®V10 par la Société Arkema **(exemple 2 selon l'invention);**
- un mélange de 70% en poids 1-méthoxy-1-tert-amylperoxycyclohexane (TAPMC) et de 30% en poids de 1,1-di(tert-butylperoxy)-3,3,5-trimethylcyclohexane tels que vendus sous la dénomination commerciale Luperox ®V10 et Luperox ®231 par la Société Arkema **(exemple 3 selon l'invention);**
- un mélange de 70% en poids 1-méthoxy-1-tert-amylperoxycyclohexane (TAPMC) et de 30% en poids de 1,1-di(tert-amylperoxy)-cyclohexane tels que vendus sous la dénomination commerciale Luperox ®V10 et Luperox ®531M60 par la Société Arkema **(exemple 4 selon l'invention);**
- OO-tert-amyl-O-(2-Ethylhexyl)-monoperoxycarbonate commercialisé par Arkema sous le nom Luperox® TAEC **(exemple 5 comparatif)** ;
- OO-tert-butyl-O-(2-Ethylhexyl)-monoperoxycarbonate commercialisé par Arkema sous le nom Luperox® TBEC **(exemple 6 comparatif).**

Le cycle de réticulation thermique est adapté en fonction de la température de décomposition des peroxydes organiques utilisés (températures de demi-vie (HLT) à 1h et 10h) selon le schéma suivant : montée en 14h jusqu'à la température de demi-vie à 10h (HLT 10h) du peroxyde utilisé (dans le cas d'un mélange de peroxydes, jusqu'à la HLT 10h du peroxyde ayant la HLT 10h la plus haute, soit pour l'exemple 3, celle du Luperox® 231, et pour l'exemple 4 celle du Luperox® 531M60), puis montée en 4h à la HLT jusqu'à la température de demi-vie à 1h (HLT 1h) du peroxyde utilisé (dans le cas d'un mélange de peroxydes, jusqu'à la HLT 1h du peroxyde ayant la HLT 1h la plus haute soit pour l'exemple 3, celle du Luperox® 231, et pour l'exemple 4 celle du Luperox® 531M60), puis refroidissement jusqu'à la température de 70°C, température à laquelle est réalisé le démoulage.

Les résultats sont présentés dans le tableau ci-dessous :

| Références (% poids) | HLT 1h en °C | HLT 10h en °C | Oxygène Actif | % poids de peroxyde pur | YI | Voile (haze) | Dureté Shore D | Qualité des plaques |
|---|---|---|---|---|---|---|---|---|
| Ex 1 Luperox® IPP27 | 75 | 46 | 0.230 | 2,97 | 0.45 | 0.50 | 74 | + |
| Ex 2 TAMPC | 108 | 87 | 0.12 | 1.67 | 1.08 | 0.39 | 67.4 | + |
| | | | 0.230 | 3.33 | 1.07 | 0.32 | 74.8 | + |
| Ex 3 TAPMC 70% - Luperox® 231 30% | (Lup. 231) 115 | (Lup. 231) 96 | 0.131 | 1.67 | 1.03 | 0.46 | 73.1 | + |
| | | | 0.262 | 3.33 | 1.38 | 0.57 | 78.4 | + |
| Ex4 TAPMC 70%- Luperox®531M60 30% | (Lup. 531M60) 112 | (Lup. 531M60) 93 | 0.114 | 1.67 | 1.09 | 0.56 | 71.3 | + |
| | | | 0.227 | 2,97 | 1.54 | 0.44 | 74.9 | + |
| Ex 5 Luperox® TAEC | 117 | 98 | 0.149 | 2.57 | 3.27 | 1.06 | 80.3 | * |
| | | | 0.223 | 3.85 | 8.00 | 1.32 | 80.2 | * |

(suite)

| Références (% poids) | HLT 1h en °C | HLT 10h en °C | Oxygène Actif | % poids de peroxyde pur | YI | Voile (haze) | Dureté Shore D | Qualité des plaques |
|---|---|---|---|---|---|---|---|---|
| Ex 6 Luperox® TBEC | 121 | 100 | 0.15<br>0.215 | 2.27<br>3.48 | 8.32<br>11.13 | 1.39<br>1.42 | 76.2<br>79.8 | **<br>** |

+ Plaques ne présentant pas de cassure au démoulage. Le joint silicone a toujours pu être ôté des plaques sans présenter de zone d'arrachement.
*Plaques parfois cassées au démoulage, légère adhésion au joint, sans arrachement du joint lors de son élimination par traction manuelle.
**Plaques toujours très cassantes au démoulage, adhérentes au joint silicone, avec arrachement de matière lors de la libération manuelle du joint après démoulage.

L'oxygène actif % est exprimé de la façon suivante : A[O] = n * 16 *titre(%) / Mw, avec n = nombre de fonctions peroxydes présentes dans la molécule peroxyde, 16 est la masse moléculaire en g/mole de l'atome d'oxygène et Mw est la masse moléculaire en g/mole du peroxyde.

On note que l'usage du TAPMC à température nettement supérieure par rapport à la référence réalisée avec IPP27 n'altère pratiquement pas l'indice de jaunissement.

On note également qu'à taux d'oxygène actif équivalent à l'exemple 1, (autour de 0,23%), les compositions des exemples 3 et 4 ne modifient pas de façon sensible la valeur de YI malgré une température là aussi plus élevée que pour l'exemple 1, et permet une dureté supérieure, sans toutefois conduire à des plaques cassantes au démoulage.

On note par ailleurs qu'à plus faible dosage, correspondant à un A[O] autour de 0,12- 0,13%, l'adjonction d'un peroxyde difonctionnel cyclique selon l'invention (exemple 3) ou d'un perkétal tert-amyl (exemple 4) permet d'approcher une dureté proche de celle de l'exemple 1.

Des exemples 5 et 6, on peut conclure que le mono tert-amyle percarbonate Luperox® TAEC et le mono tert-butyle percarbonate Luperox® TBEC conduisent à des plaques qui présentent un indice de jaunissement YI bien plus élevé par rapport à la référence de l'exemple 1 et aux exemples 2 à 4. De plus, pour l'exemple 6, malgré une dureté comparable à celle de l'exemple 5, les plaques cassent lors du démoulage après réticulation et la plaque ne peut être détachée facilement du joint qui se déchire partiellement.

Les exemples 5 et 6 montrent donc que l'emploi de peroxydes de type percarbonate ne permet pas de former de plaques de bon indice de jaunissement YI, de Haze faible et de haute dureté sans que celle-ci ne s'accompagne de casse au démoulage.

## Revendications

**1.** Utilisation d'un ou plusieurs peroxydes de formule (I) suivante :

1-alcoxy-1-t-alkylperoxycyclohexane (I)

Formule (I) dans laquelle le groupement alcoxy comprend de 1 à 4 atomes de carbone, le groupement t-alkyl comprend de 4 à 12 atomes de carbone, et le cycle cyclohexane est éventuellement substitué par 1 ou 3 groupements alkyle, chacun comportant de 1 à 3 atomes de carbone ;
pour la polymérisation d'un ou plusieurs monomères allyliques et/ou de copolymères allyliques.

**2.** Utilisation selon la revendication 1, **caractérisée en ce que** le ou les peroxydes de formule (I) est ou sont choisis parmi le 1-méthoxy-1-tert-amylperoxycyclohexane (TAPMC), le 1-méthoxy-1-t-butylperoxycyclohexane (TBPMC), le 1-méthoxy-1-t-amylperoxy-3,3,5-triméthylcyclohexane, le 1-méthoxy-1-t-butylperoxy-3,3,5-triméthylcyclohexane, le 1-éthoxy-1-t-amylperoxycyclohexane (TAPEC), le 1-éthoxy-1-t-butylperoxycyclohexane (TBPEC), le 1-éthoxy-1-t-amylperoxy-3,3,5-trimethylcyclohexane et/ou le 1-éthoxy-1-t-butylperoxy-3,3,5-trimethylcyclohexane.

**3.** Utilisation selon la revendication 1 ou 2, **caractérisée en ce que** le peroxyde de formule (I) est le 1-méthoxy-1-tert-amylperoxycyclohexane.

**4.** Utilisation selon l'une quelconque des revendications précédentes, **caractérisée en ce que** le ou les monomères

allyliques est ou sont choisis parmi les monomères bis(allyl carbonate).

5. Utilisation selon l'une quelconque des revendications précédentes, **caractérisée en ce que** le ou les monomères allyliques est ou sont choisis parmi les monomères bis(allyl carbonate) de diol de formule (II) suivante :

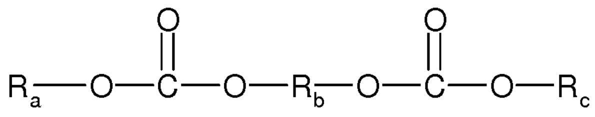

Formule (II) dans laquelle :

• $R_a$ et $R_c$, identiques ou différents, représentent un groupement allyle de formule suivante :

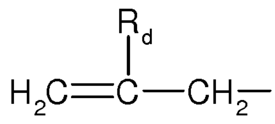

Formule dans laquelle $R_d$ est choisi parmi :

- un atome d'hydrogène,
- un atome d'halogène, de préférence un atome de fluor ou de chlore,
- un groupement alkyle, linéaire ou ramifié, en $C_1$-$C_4$,

• $R_b$ est choisi parmi les groupes alkylène, les groupes éther d'alkylène, les groupes éther d'alkylène aromatique, les groupes polyéther d'alkylène, les groupes carbonate d'alkylène et leurs mélanges.

6. Utilisation selon l'une quelconque des revendications précédentes, **caractérisée en ce que** le ou les monomère allylique est choisi parmi l'éthylèneglycol bis allyl carbonate, le diéthylène glycol bis 2-méthyl carbonate, le diéthylèneglycol bis (allyl carbonate), l'éthylèneglycol bis (2-chloro allyl carbonate), le triéthylèneglycol bis (allyl carbonate), le 1,3-propanediol bis (allyl carbonate), le propylène glycol bis (2-éthyl allyl carbonate), le 1,3-butènediol bis (allyl carbonate), le 1,4-butenediol bis (2-bromo allyl carbonate), le dipropylèneglycol bis (allyl carbonate), le triméthylèneglycol bis (2-éthyl allyl carbonate), le pentaméthylèneglycol bis (allyl carbonate), l'isopropylène bis phénol-A bis (allyl carbonate) et leurs mélanges.

7. Utilisation selon l'une quelconque des revendications précédentes, **caractérisée en ce que** le monomère allylique est choisi parmi le diéthylèneglycol bis (allyl carbonate).

8. Utilisation selon l'une quelconque des revendications précédentes, **caractérisée en ce que** le ou les copolymères allyliques est ou sont obtenus à partir de la polymérisation des monomères bis(allyl carbonate) de diol tels que définis selon la revendication 5 ou 6.

9. Utilisation selon l'une quelconque des revendications précédentes, **caractérisée en ce que** le ou les copolymères allyliques est ou sont choisis parmi les poly(allyl carbonates) de polyol.

10. Utilisation selon l'une quelconque des revendications précédentes, **caractérisée en ce que** le ou les copolymères allyliques est ou sont obtenu(s) à partir de la polymérisation d'un monomère bis(allyl)carbonate et d'un polyéther de diol.

11. Composition polymérisable comprenant au moins un peroxyde de formule (I) telle que définie selon l'une quelconque des revendications 1 à 3 et au moins un monomère allylique, tel que défini selon l'une quelconque des revendications 1, 6 et 7, et/ou au moins un copolymère allylique tel que défini selon l'une quelconque des revendications 1, 8 à 10.

12. Composition selon la revendication 11, **caractérisée en ce qu'**elle comprend en outre au moins un peroxyde additionnel différent des peroxydes de formule (I), de préférence choisi parmi les peroxydes de formule (III) :

bis-t-alkylperoxycyclohexane (III)

Formule (III) dans laquelle chaque groupement t-alkyle comprend de 4 à 12 atomes de carbone et le cycle cyclohexane est éventuellement substitué par 1 ou 3 groupements alkyle, chacun comportant de 1 à 3 atomes de carbone, de préférence, le peroxyde de de formule (III) est choisi dans le groupe constitué par le 1,1-di(tert-butylperoxy)-3,3,5-trimethylcyclohexane, le 1,1-di(tert-amyl peroxy)-cyclohexane, le 1,1-di(t-butylperoxy)-cyclohexane et des mélanges de ceux-ci.

**13.** Composition selon la revendication 12, dans laquelle le ratio entre le ou les peroxydes de formule (I) et le au moins un peroxyde additionnel différent des peroxydes de formule (I), de préférence choisi parmi les peroxydes de formule (III) est compris entre 99:1 et 30:70, de préférence entre 50:50 et 99:1, encore préférentiellement entre 60 :40 et 80 :20.

**14.** Composition selon l'une quelconque des revendications précédentes, **caractérisée en ce qu'**elle comprend en outre au moins un photoinitiateur, de préférence choisi parmi les dérivés d'acétophénone et de benzophénone.

**15.** Utilisation de la composition telle que définie selon l'une quelconque des revendications 11 à 14 pour la fabrication d'un verre organique, de préférence une lentille ophtalmique.

**16.** Procédé de préparation d'une composition polymère, **caractérisé en ce qu'**il comprend au moins une étape de polymérisation d'une composition polymérisable, telle que définie selon l'une quelconque des revendications 11 à 14, à une ou des températures allant de 40 à 140°C, de préférence allant de 50 à 130°C, encore de préférence allant de 60 à 130°C.

**17.** Composition polymère **caractérisée en ce qu'**elle est obtenue par polymérisation de la composition polymérisable telle que définie selon l'une quelconque des revendications 11 à 14.

**18.** Verre organique obtenu par polymérisation d'une composition polymérisable telle que définie selon l'une quelconque des revendications 11 à 14.

**19.** Verre organique selon la revendication 18, **caractérisé en ce qu'**il est choisi parmi les fenêtres d'instruments ou de détecteurs optiques ou les lentilles ophtalmiques.

**20.** Verre organique selon la revendication 19, **caractérisé en ce qu'**il est choisi parmi les lentilles ophtalmiques teintées avec un ou plusieurs pigments et/ou colorants organiques.

**21.** Procédé de préparation d'un verre organique comprenant au moins les étapes successives suivantes :

- une étape d'introduction d'une composition polymérisable telle que définie selon l'une quelconque des revendications 11 à 14 dans un dispositif comprenant au moins un moule,
- une étape de polymérisation de ladite composition à une ou des températures allant de 40 à 140°C, de préférence allant de 50 à 130°C, encore de préférence allant de 60 à 130°C,
- une étape de récupération du verre organique.

## Patentansprüche

**1.** Verwendung eines oder mehrerer Peroxide mit der folgenden Formel (I):

1-Alkoxy-1-t-alkylperoxycyclohexan (I)

Formel (I), in welcher die Alkoxy-Gruppe 1 bis 4 Kohlenstoffatome umfasst, die t-Alkyl-Gruppe 4 bis 12 Kohlenstoffatome umfasst und der Cyclohexan-Ring gegebenenfalls durch 1 oder 3 Alkyl-Gruppen substituiert ist, wobei jede 1 bis 3 Kohlenstoffatome aufweist;
zur Polymerisation von einem oder mehreren allylischen Monomeren und/oder von allylischen Copolymeren.

**2.** Verwendung nach Anspruch 1, **dadurch gekennzeichnet, dass** das oder die Peroxide mit der Formel (I) unter 1-Methoxy-1-tert-amylperoxycyclohexan (TAPMC), 1-Methoxy-1-t-butylperoxycyclohexan (TBPMC), 1-Methoxy-1-t-amylperoxy-3,3,5-trimethylcyclohexan, 1-Methoxy-1-t-butylperoxy-3,3,5-trimethylcyclohexan, 1-Ethoxy-1-t-amylperoxycyclohexan (TAPEC), 1-Ethoxy-1-t-butylperoxycyclohexan (TBPEC), 1-Ethoxy-1-t-amylperoxy-3,3,5-trimethylcyclohexan und/oder 1-Ethoxy-1-t-butylperoxy-3,3,5-trimethylcyclohexan ausgewählt ist oder sind.

3. Verwendung nach Anspruch 1 oder 2, **dadurch gekennzeichnet, dass** das Peroxid mit der Formel (I) das 1-Methoxy-1-tert-amylperoxycyclohexan ist.

4. Verwendung nach einem der vorhergehenden Ansprüche, **dadurch gekennzeichnet, dass** das oder die allylischen Monomere unter den Bis(allylcarbonat)-Monomeren ausgewählt ist oder sind.

5. Verwendung nach einem der vorhergehenden Ansprüche, **dadurch gekennzeichnet, dass** das oder die allylischen Monomere unter den Diol-bis(allylcarbonat)-Monomeren mit der folgenden Formel (II) ausgewählt ist oder sind:

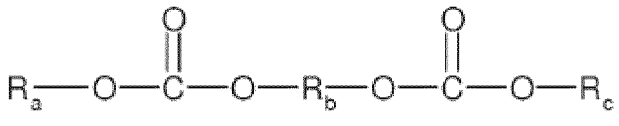

Formel (II), in welcher:

• $R_a$ und $R_c$, gleich oder verschieden, für eine AllylGruppe mit der folgenden Formel stehen:

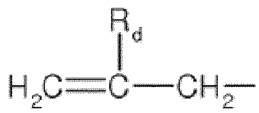

Formel, in welcher $R_d$ ausgewählt ist unter:

- einem Wasserstoffatom,
- einem Halogenatom, bevorzugt einem Fluor- oder Chloratom,
- einer geradkettigen oder verzweigten $C_1$-$C_4$-Alkyl-Gruppe,

• $R_b$ unter den Alkylen-Gruppen, den Alkylenether-Gruppen, den Gruppen von aromatischem Alkylenether, den Alkylenpolyether-Gruppen, den Alkylencarbonat-Gruppen und ihren Mischungen ausgewählt ist.

6. Verwendung nach einem der vorhergehenden Ansprüche, **dadurch gekennzeichnet, dass** das oder die allylische Monomere unter Ethylenglycol-bis-allylcarbonat, Diethylenglycol-bis-2-methylcarbonat, Diethylenglycolbis(allylcarbonat), Ethylenglycol-bis(2-chlorallylcarbonat), Triethylenglycolbis(allylcarbonat), 1,3-Propandiol-bis(allylcarbonat), Propylenglycol-bis(2-ethylallylcarbonat), 1,3-Butendiol-bis(allylcarbonat), 1,4-Butendiol-bis(2-bromallylcarbonat), Dipropylenglycolbis(allylcarbonat), Trimethylenglycol-bis(2-ethylallylcarbonat), Pentamethylenglycolbis(allylcarbonat), Isopropylen-bis-phenol-A-bis(allylcarbonat) und ihren Mischungen ausgewählt ist.

7. Verwendung nach einem der vorhergehenden Ansprüche, **dadurch gekennzeichnet, dass** das allylische Monomer unter dem Diethylenglycol-bis(allylcarbonat) ausgewählt ist.

8. Verwendung nach einem der vorhergehenden Ansprüche, **dadurch gekennzeichnet, dass** das oder die allylischen Copolymere durch Polymerisation der Diolbis(allylcarbonat)-Monomere wie nach Anspruch 5 oder 6 definiert erhalten wird oder werden.

9. Verwendung nach einem der vorhergehenden Ansprüche, **dadurch gekennzeichnet, dass** das oder die allylischen Copolymere unter den Polyol-poly(allylcarbonaten) ausgewählt ist oder sind.

10. Verwendung nach einem der vorhergehenden Ansprüche, **dadurch gekennzeichnet, dass** das oder die allylischen Copolymere durch Polymerisation eines Bis(allyl)carbonat-Monomers und eines Diolpolyethers erhalten wird oder werden.

11. Polymerisierbare Zusammensetzung, umfassend mindestens ein Peroxid mit der Formel (I) wie nach einem der Ansprüche 1 bis 3 definiert und mindestens ein allylisches Monomer wie nach einem der Ansprüche 1, 6 und 7 definiert und/oder mindestens ein allylisches Copolymer wie nach einem der Ansprüche 1, 8 bis 10 definiert.

**12.** Zusammensetzung nach Anspruch 11, **dadurch gekennzeichnet, dass** sie ferner mindestens ein zusätzliches Peroxid umfasst, das von den Peroxiden mit der Formel (I) verschieden ist und bevorzugt unter den Peroxiden mit der Formel (III) ausgewählt ist:

Bis-t-alkylperoxycyclohexan (III)

Formel (III), in welcher die t-Alkyl-Gruppe 4 bis 12 Kohlenstoffatome umfasst und der Cyclohexan-Ring gegebenenfalls durch 1 oder 3 Alkyl-Gruppen substituiert ist, wobei jede 1 bis 3 Kohlenstoffatome aufweist, das Peroxid mit der Formel (III) bevorzugt aus der Gruppe ausgewählt ist, die aus 1,1-Di(tert-butylperoxy)-3,3,5-trimethylcyclohexan, 1,1-Di(tert-amylperoxy)-cyclohexan, 1,1-Di(t-butylperoxy)-cyclohexan und Mischungen davon besteht.

**13.** Zusammensetzung nach Anspruch 12, bei der das Verhältnis zwischen dem oder den Peroxiden mit der Formel (I) und dem mindestens einen zusätzlichen Peroxid, das von den Peroxiden mit der Formel (I) verschieden ist und bevorzugt unter den Peroxiden mit der Formel (III) ausgewählt ist, zwischen 99:1 und 30:70, bevorzugt zwischen 50:50 und 99:1, noch bevorzugter zwischen 60:40 und 80:20 beträgt.

**14.** Zusammensetzung nach einem der vorhergehenden Ansprüche, **dadurch gekennzeichnet, dass** sie ferner mindestens einen Photoinitiator umfasst, der bevorzugt unter den Verbindungen von Acetophenon und von Benzophenon ausgewählt ist.

**15.** Verwendung der Zusammensetzung wie nach einem der Ansprüche 11 bis 14 definiert zur Herstellung eines organischen Glases, bevorzugt einer ophthalmischen Linse.

**16.** Verfahren zur Herstellung einer Polymerzusammensetzung, **dadurch gekennzeichnet, dass** es mindestens einen Schritt der Polymerisation einer polymerisierbaren Zusammensetzung wie nach einem der Ansprüche 11 bis 14 definiert bei einer oder mehreren Temperaturen von 40 bis 140 °C, bevorzugt von 50 bis 130 °C, noch bevorzugter von 60 bis 130 °C umfasst.

**17.** Polymerzusammensetzung, **dadurch gekennzeichnet, dass** sie durch Polymerisation der polymerisierbaren Zusammensetzung wie nach einem der Ansprüche 11 bis 14 definiert erhalten wird.

**18.** Organisches Glas, das durch Polymerisation der polymerisierbaren Zusammensetzung wie nach einem der Ansprüche 11 bis 14 definiert erhalten wird.

**19.** Organisches Glas nach Anspruch 18, **dadurch gekennzeichnet, dass** es unter den Fenstern von Instrumenten oder von optischen Detektoren oder den ophthalmischen Linsen ausgewählt ist.

**20.** Organisches Glas nach Anspruch 19, **dadurch gekennzeichnet, dass** es unter den mit einem oder mehreren Pigmenten und/oder organischen Farbstoffen getönten ophthalmischen Linsen ausgewählt ist.

**21.** Verfahren zur Herstellung eines organischen Glases, umfassend mindestens die folgenden aufeinanderfolgenden Schritte:

- einen Schritt des Einbringens einer polymerisierbaren Zusammensetzung wie nach einem der Ansprüche 11 bis 14 definiert in eine Vorrichtung, die mindestens eine Form umfasst,
- einen Schritt der Polymerisation der Zusammensetzung bei einer oder mehreren Temperaturen von 40 bis 140 °C, bevorzugt von 50 bis 130 °C, noch bevorzugter von 60 bis 130 °C,
- einen Schritt des Rückgewinnens des organischen Glases.

## Claims

**1.** Use of one or more peroxides of the following formula (I):

1-alkoxy-1-t-alkylperoxycyclohexane (I)

in which formula (I) the alkoxy group comprises from 1 to 4 carbon atoms, the t-alkyl group comprises from 4 to 12 carbon atoms, and the cyclohexane ring is optionally substituted by 1 or 3 alkyl groups, each comprising from 1 to

3 carbon atoms;
for the polymerization of one or more allylic monomers and/or allylic copolymers.

**2.** Use according to Claim 1, **characterized in that** the peroxide(s) of formula (I) is/are chosen from 1-methoxy-1-tert-amylperoxycyclohexane (TAPMC), 1-methoxy-1-t-butylperoxycyclohexane (TBPMC), 1-methoxy-1-t-amylperoxy-3,3,5-trimethylcyclohexane, 1-methoxy-1-t-butylperoxy-3,3,5-trimethylcyclohexane, 1-ethoxy-1-t-amylperoxycyclohexane (TAPEC), 1-ethoxy-1-t-butylperoxycyclohexane (TBPEC), 1-ethoxy-1-t-amylperoxy-3,3,5-trimethylcyclohexane and/or 1-ethoxy-1-t-butylperoxy-3,3,5-trimethylcyclohexane.

**3.** Use according to Claim 1 or 2, **characterized in that** the peroxide of formula (I) is 1-methoxy-1-tert-amylperoxycyclohexane.

**4.** Use according to any one of the preceding claims, **characterized in that** the allylic monomer(s) is/are chosen from bis(allyl carbonate) monomers.

**5.** Use according to any one of the preceding claims, **characterized in that** the allylic monomer(s) is/are chosen from diol bis(allyl carbonate) monomers of the following formula (II):

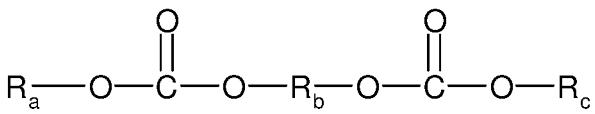

in which formula (II):

- $R_a$ and $R_c$, which are identical or different, represent an allyl group of the following formula:

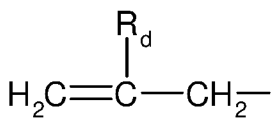

in which formula $R_d$ is chosen from:

- a hydrogen atom,
- a halogen atom, preferably a fluorine or chlorine atom,
- a linear or branched $C_1$-$C_4$ alkyl group,
- $R_b$ is chosen from alkylene groups, alkylene ether groups, aromatic alkylene ether groups, alkylene polyether groups, alkylene carbonate groups and mixtures thereof.

**6.** Use according to any one of the preceding claims, **characterized in that** the allylic monomer(s) is/are chosen from ethylene glycol bis(allyl carbonate), diethylene glycol bis(2-methyl carbonate), diethylene glycol bis(allyl carbonate), ethylene glycol bis(2-chloro allyl carbonate), triethylene glycol bis(allyl carbonate), 1,3-propanediol bis(allyl carbonate), propylene glycol bis(2-ethyl allyl carbonate), 1,3-butenediol bis(allyl carbonate), 1,4-butenediol bis(2-bromo allyl carbonate), dipropylene glycol bis(allyl carbonate), trimethylene glycol bis(2-ethyl allyl carbonate), pentamethylene glycol bis(allyl carbonate), isopropylene bis phenol-A bis(allyl carbonate) and mixtures thereof.

**7.** Use according to any one of the preceding claims, **characterized in that** the allylic monomer is diethylene glycol bis(allyl carbonate).

**8.** Use according to any one of the preceding claims, **characterized in that** the allylic copolymer(s) is/are obtained from the polymerization of the diol bis(allyl carbonate) monomers as defined according to Claim 5 or 6.

**9.** Use according to any one of the preceding claims, **characterized in that** the allylic copolymer(s) is/are chosen from polyol poly(allyl carbonates).

**10.** Use according to any one of the preceding claims, **characterized in that** the allylic copolymer(s) is/are obtained from the polymerization of a bis(allyl carbonate) monomer and a polyether diol.

**11.** Polymerizable composition comprising at least one peroxide of formula (I) as defined according to any one of Claims 1 to 3, and at least one allylic monomer as defined according to any one of Claims 1, 6 and 7, and/or at least one allylic copolymer as defined according to any one of Claims 1 and 8 to 10.

**12.** Composition according to Claim 11, **characterized in that** it also comprises at least one additional peroxide other than the peroxides of formula (I), preferably chosen from the peroxides of formula (III):

bis-t-alkylperoxycyclohexane (III)

in which formula (III) each t-alkyl group comprises from 4 to 12 carbon atoms and the cyclohexane ring is optionally substituted by 1 or 3 alkyl groups, each comprising from 1 to 3 carbon atoms; preferably, the peroxide of formula (III) is selected from the group consisting of 1,1-di(tert-butylperoxy)-3,3,5-trimethylcyclohexane, 1,1-di(tert-amylperoxy)cyclohexane, 1,1-di(t-butylperoxy)cyclohexane and mixtures thereof.

**13.** Composition according to Claim 12, wherein the ratio between the peroxide(s) of formula (I) and the at least one additional peroxide other than the peroxides of formula (I), preferably chosen from the peroxides of formula (III), is between 99:1 and 30:70, preferably between 50:50 and 99:1, even more preferentially between 60:40 and 80:20.

**14.** Composition according to any one of the preceding claims, **characterized in that** it also comprises at least one photoinitiator, preferably chosen from acetophenone and benzophenone derivatives.

**15.** Use of a composition as defined according to any one of Claims 11 to 14, for manufacturing an organic glass, preferably an ophthalmic lens.

**16.** Process for preparing a polymer composition, **characterized in that** it comprises at least one step of polymerization of a polymerizable composition as defined according to any one of Claims 11 to 14 at one or more temperatures ranging from 40 to 140°C, preferably ranging from 50 to 130°C, even more preferably ranging from 60 to 130°C.

**17.** Polymer composition, **characterized in that** it is obtained by polymerization of the polymerizable composition as defined according to any one of Claims 11 to 14.

**18.** Organic glass obtained by polymerization of a polymerizable composition as defined according to any one of Claims 11 to 14.

**19.** Organic glass according to Claim 18, **characterized in that** it is chosen from instrument or optical detector windows or ophthalmic lenses.

**20.** Organic glass according to Claim 19, **characterized in that** it is chosen from ophthalmic lenses tinted with one or more organic dyes and/or pigments.

**21.** Process for preparing an organic glass comprising at least the following successive steps:

- a step of introducing a polymerizable composition as defined according to any one of Claims 11 to 14 into a device comprising at least one mould,
- a step of polymerization of said composition at one or more temperatures ranging from 40 to 140°C, preferably ranging from 50 to 130°C, even more preferably ranging from 60 to 130°C,
- a step of recovering the organic glass.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 6506864 B
- WO 89274 A


### Littérature non-brevet citée dans la description


- *CHEMICAL ABSTRACTS,* 142-22-3
- *CHEMICAL ABSTRACTS,* 105-64-6